# EUROPÄISCHE PATENTSCHRIFT

(11) **EP 3 115 651 B1**
(45) Veröffentlichungstag und Bekanntmachung des Hinweises auf die Patenterteilung: **31.01.2018**
(21) Anmeldenummer: 16171875.4
(22) Anmeldetag: 30.05.2016
(51) Int. Cl.: F16H 61/4017, F16H 61/431, F16H 61/433

(54) **HYDROSTATISCHES GETRIEBE, FAHRANTRIEB MIT DEM GETRIEBE UND VERFAHREN ZUR STEUERUNG DES GETRIEBES**
HYDROSTATIC TRANSMISSION, DRIVE TRAIN WITH THE TRANSMISSION AND METHOD FOR CONTROLLING THE TRANSMISSION
TRANSMISSION HYDROSTATIQUE, DISPOSITIF D'ENTRAÎNEMENT AVEC LA TRANSMISSION ET PROCÉDÉ DE COMMANDE DE LA TRANSMISSION

(30) Priorität: 08.07.2015 DE 102015212727
(43) Veröffentlichungstag der Anmeldung: 11.01.2017
(73) Patentinhaber: ROBERT BOSCH GMBH, 70442 Stuttgart (DE)
(72) Erfinder: Lenzgeiger, Ulrich, 86424 Dinkelscherben (DE); Spang, Joerg, 89233 Neu-Ulm (DE)
(74) Vertreter: Thürer, Andreas

(56) Entgegenhaltungen:
- EP-A1- 2 767 739
- DE-A1-102005 037 619
- DE-A1-102011 120 665
- US-A- 5 410 878
- US-A1- 2007 078 041
- US-A1- 2012 152 641

## Beschreibung

Die Erfindung betrifft ein hydrostatisches Getriebe gemäß dem Oberbegriff des Patentanspruchs 1, einen Fahrantrieb mit dem Getriebe gemäß dem Patentanspruch 12, sowie ein Verfahren zur Regelung des Arbeitsdrucks des Getriebes gemäß dem Patentanspruch 13.

Hydrostatische Getriebe, bestehend aus einer von einer Antriebsmaschine antreibbaren ersten Hydromaschine, die in einem insbesondere geschlossenen hydraulischen Kreislauf mit einer zweiten Hydromaschine fluidisch verbunden ist, benötigen eine Warmlaufphase mit begrenztem Arbeitsdruck, um Schäden des Getriebes bei beispielsweise zu geringer Druckmitteltemperatur zu vermeiden. Derartige Warmlaufphasen sind beispielsweise in Datenblättern der Hydromaschinen spezifiziert. Als Beispiel für eine Warmlaufphase einer herkömmlichen Axialkolbenmaschine im Temperaturbereich von -40°C bis -20°C besagt eine Spezifikation beispielsweise, dass während der Warmlaufphase innerhalb einer Zeit t kleiner/gleich 15 Minuten der Arbeitsdruck p kleiner/gleich einem vorbestimmten Bruchteil des Nenndrucks pₙₒₘ sein muss. Des Weiteren darf eine Drehzahl n einen vorbestimmten Bruchteil der Nenndrehzahl nₙₒₘ nicht überschreiten.

Bei Hydromaschinen ohne Druckregelung kann aber während der Warmlaufphase, wenn die Hydromaschine als Pumpe eingesetzt wird, bereits bei einer geringen Drehzahl und bei geringem Verdrängungsvolumen die erlaubte Grenze für den Arbeitsdruck überschritten werden.

In der Offenlegungsschrift DE 10 2011 120 665 A1 ist ein hydrostatisches Getriebe mit einer Hydropumpe und einem Hydromotor gezeigt. Dabei wird dargelegt, wie auf Basis einer Momentenbilanz und eines erfassten oder abgeschätzten Verdrängungsvolumens der Hydropumpe der Arbeitsdruck ermittelt wird. Dabei ist die Kenntnis des Drehmoments der Antriebsmaschine, aller Nebenverbraucher und des Fahrmoments M_{F}, vorausgesetzt. Zwar kann über die vorgeschlagene Momentenbilanz und das Verdrängungsvolumen der Hydropumpe der Arbeitsdruck ermittelt werden, jedoch ist hierfür nach wie vor ein erheblicher Aufwand für Sensorik zur Erfassung der Drehmomente und des Verdrängungsvolumens notwendig. Zudem enthält die Methode aufgrund der vorgeschlagenen Abschätzungen für Drehmomente und das Verdrängungsvolumen der Hydropumpe eine gewisse Unsicherheit für das Ergebnis des Arbeitsdrucks. Eine Begrenzung des Arbeitsdrucks auf Basis dieser Methode trägt somit eine gewisse Unsicherheit und ein Risiko zur Überlastung des hydrostatischen Getriebes in sich.

In der Druckschrift US 5,410878 wird zur Sicherstellung des Einhaltens einer Warmlaufphase eine umfangreiche Sensorik vorgeschlagen. So wird beispielsweise die Drehzahl der Antriebsmaschine, die Menge an Lecköl, der Arbeitsdruck der Hydropumpe, ein Temperatursensor zur Erfassung der Öltemperatur der Antriebsmaschine und ein Temperatursensor zur Erfassung von Kühlmittel der Antriebsmaschine, sowie ein Temperatursensor zur Erfassung der Temperatur des Druckmittels des hydraulischen Kreislaufs vorgeschlagen. Ein diese Eingangssignale verarbeitendes Steuersystem vergleicht die Drehzahl der Antriebsmaschine, den Leckagestrom und den Arbeitsdruck fortwährend, bis die genannten Temperaturen die notwendigen, vorbestimmten Grenzwerte einhalten. Nachteilig hierbei ist die aufwendige Sensorik und Verarbeitung der Messsignale, um die Warmlaufphase hinreichend absichern zu können.

Einen Weg mit weniger Sensorik wird in der Druckschrift EP 2 767 739 A1 beschrieben, die ein leistungsverzweigtes Getriebe mit einem hydrostatischen Leistungszweig zeigt. Dabei ist die Hydropumpe derart ausgestaltet, dass ein an ihr wirksamer Steuerdruck in Richtung einer Vergrößerung ihres Verdrängungsvolumens und der sich daraufhin einstellende Arbeitsdruck des hydraulischen Kreises in Richtung der Verkleinerung ihres Verdrängungsvolumens wirksam ist. Über eine Regelung des Steuerdrucks, beispielsweise über ein Druckreduzierventil wie es in der Druckschrift DE 10 2005 037 619 A1 gezeigt ist, kann dann auf den Arbeitsdruck regelnd Einfluss genommen werden. Derart aufgebaute Hydromaschinen (Hydropumpen) sind beispielsweise aus dem Datenblatt RD92004/06.12 der Anmelderin bekannt. Nachteilig an dieser Lösung ist, dass die Belastung des hydraulischen Kreislaufs während der Warmlaufphase nicht verhindert.

Das hydrostatische Getriebe nach der gattungsgemäßen US 2012/0152641 A1 besitzt ein im Deutschen als Druckabschneidventil bezeichnetes Ventil, mit dem der Arbeitsdruck in den beiden Arbeitsleitungen auf zwei verschiedene Werte begrenzt werden kann. Das Druckabschneidventil ist ein 2/2 Wegeventil mit einer Sperrstellung und mit einer Offenstellung und einerseits an Tank und andererseits an eine Steuerdruckversorgungsleitung angeschlossen. Es wird in Öffnungsrichtung über ein Rückschlagventil beziehungsweise jeweils von dem Druck beaufschlagt, der in der Arbeitsleitung ansteht, die den höheren Druck, nämlich den Arbeitsdruck führt. In Schließrichtung wird das Druckabschneidventil von einer Feder und in Abhängigkeit von der Ansteuerung eines Pilotventils mit dem Speisedruck oder mit Tankdruck beaufschlagt.

Es wird deutlich, dass zur Begrenzung des Arbeitsdrucks unabhängig davon, ob dieser nun auf den höheren oder auf den niedrigeren Wert begrenzt werden soll, der Arbeitsdruck auf eine Steuerseite des Druckabschneidventils zurückgeführt wird. Das bedeutet einen hohen Aufwand.

Dem gegenüber liegt der Erfindung die Aufgabe zugrunde, ein hydrostatisches Getriebe mit einem verbesserten Schutz gegen Beschädigung zu schaffen. Des Weiteren liegt der Erfindung die Aufgabe zugrunde, einen Fahrantrieb mit diesem hydrostatischen Getriebe und ein Verfahren zur Steuerung des hydrostatischen Getriebes zu schaffen. Die erste Aufgabe wird gelöst durch ein hydrostatisches Getriebe mit den Merkmalen des Patentanspruchs 1, die zweite Aufgabe durch einen hydrostatischen Fahrantrieb mit den Merkmalen des Patentanspruchs 12 und die dritte Aufgabe durch ein Verfahren mit den Merkmalen des Patentanspruchs 13.

Vorteilhafte Weiterbildungen des Getriebes sind in den Patentansprüchen 2 bis 11, die des Verfahrens im Patentanspruch 14 beschrieben.

Ein hydrostatisches Getriebe für einen Fahrantrieb hat eine mit einer Antriebsmaschine koppelbare erste Hydromaschine mit einem verstellbaren ersten Verdrängungsvolumen, die mit wenigstens einer mit einem Abtrieb des Fahrantriebs koppelbaren, zweiten Hydromaschine des Getriebes in einem, insbesondere geschlossenen, hydraulischem Kreis angeordnet ist. Dabei ist an der ersten Hydromaschine, insbesondere an einem Verstellelement zur Verstellung des ersten Verdrängungsvolumens, ein Steuerdruck des Getriebes in Richtung einer Vergrößerung des ersten Verdrängungsvolumens und in entgegengesetzter Richtung ein von dieser Verstellung abhängiger Arbeitsdruck der zweiten Hydromaschine wirksam. Auf diese Weise ist über die Steuereinrichtung der Arbeitsdruck des Getriebes mittels einer Änderung, insbesondere Regelung, des Steuerdrucks regelbar. Erfindungsgemäß ist in der Steuereinrichtung eine Betriebsphase des Getriebes parametriert, während der über die Steuereinrichtung der Arbeitsdruck auf einen Bruchteil seines jeweils zugeordneten Nennwertes begrenzt ist. Dabei sind in der Steuereinrichtung in Abhängigkeit der Drehzahl der ersten Hydromaschine der Arbeitsdruck und der dem Arbeitsdruck zugeordnete Steuerdruck oder ein dem Steuerdruck entsprechendes elektrisches Signal abgelegt.

Es ist also ein Kennfeld des Steuerdrucks in Abhängigkeit vom Arbeitsdruck und von der Drehzahl der ersten Hydromaschine abgelegt.

Auf diese Weise ist das hydrostatische Getriebe in der Betriebsphase besser gegen eine Beschädigung aufgrund eines zu hohen Arbeitsdrucks geschützt. Dabei erweist sich die Ausgestaltung der ersten Hydromaschine und die damit verbundene Regelbarkeit des Arbeitsdrucks über die Regelung des Steuerdrucks als vorrichtungstechnisch besonders einfach, da über die Kenntnis der Abhängigkeit des Arbeitsdrucks vom Steuerdruck auf eine aufwendige Drucksensorik verzichtet werden kann. Das hydrostatische Getriebe ist somit in der Betriebsphase ohne aufwendige Drucksensorik gegen die genannte Überlast geschützt.

In einer Weiterbildung weist der hydraulische Kreis wenigstens eine weitere zweite Hydromaschine auf, die über die erste Hydromaschine mit Druckmittel versorgbar ist. Vorzugsweise sind die zweiten Hydromaschinen hydraulisch parallel mit der ersten Hydromaschine in Druckmittelverbindung bringbar, insbesondere gebracht.

Vorzugsweise weist die eine oder weisen die mehreren zweiten Hydromaschinen ebenso jeweils ein von der Steuereinrichtung verstellbares, zweites Verdrängungsvolumen auf. Die eine oder die mehreren zweiten Hydromaschinen haben dabei vorzugsweise eine Verstelleinrichtung, über die das jeweilige zweite Verdrängungsvolumen proportional zu einem elektrischen Sollwertsignal verstellbar ist. Dann ist vorteilhafter Weise in Kenntnis des Sollwertsignals für das zweite Verdrängungsvolumen der Istwert des so angesteuerten zweiten Verdrängungsvolumens im Wesentlichen bekannt.

In einer Weiterbildung beträgt der Bruchteil zwischen 60 % und 80 %, insbesondere etwa 70 % des jeweiligen Nennwertes. Der jeweilige Nennwert ist eine spezifische Eigenschaft der jeweiligen Hydromaschine und/oder des hydrostatischen Getriebes und ist vorzugsweise in der Steuereinrichtung abgelegt.

In einer möglichen Ausprägung ist die erste Hydromaschine als verstellbare Axialkolbenmaschine in Schrägscheibenbauweise ausgebildet und weist mit einer Triebwelle umlaufende Arbeitskolben auf, die an einer um eine Schwenkachse verschwenkbaren Schrägscheibe abgestützt sind. Bei der Schrägscheibe handelt es sich dann um das bereits erwähnte Verstellelement. Die Triebwelle ist dabei vorzugsweise mit der Antriebsmaschine koppelbar. Vorzugsweise ist die Schrägscheibe von einer mit Steuerdruckmittel beaufschlagbaren Stellvorrichtung insbesondere einem Stellzylinder, zur Schwenkachse beabstandet angelenkt. Der Steuerdruck ist dabei derjenige des Steuerdruckmittels. Über eine Steuerscheibe, die von wenigstens zwei Drucknieren durchsetzt ist, sind von den Arbeitskolben begrenzte, hydrostatische Arbeitsräume der ersten Hydromaschine alternierend mit deren Niederdruck- und Hochdruckseite in Druckmittelverbindung bringbar. Die Steuerscheibe ist vorzugsweise um ihre Längsachse verdrillt angeordnet, so dass zumindest eine der Drucknieren bezogen auf eine von der Schwenkachse und der Drehachse der Arbeitsräume, oder von deren parallelen aufgespannten Ebene asymmetrisch verteilt angeordnet ist. Auf diese Weise ist der Arbeitsdruck, wie bereits erwähnt in Richtung einer Verkleinerung des ersten Verdrängungsvolumens wirksam.

In einer Weiterbildung ist die Betriebsphase eine Einlaufphase, insbesondere eine Warmlauf- oder Erwärmungsphase, oder sie ist eine Auslaufphase, insbesondere eine Abkühlphase, des Getriebes oder zumindest einer ihrer Hydromaschinen. Beide, Einlauf- sowie Auslaufphase, zeichnen sich dadurch aus, dass sie das Ziel haben, relevante Prozessgrößen des Getriebes oder zumindest einer der Hydromaschinen in einen zugeordneten bestimmungsgemäßen Bereiche zu bringen.

In einer Weiterbildung sind sowohl die Einlaufphase als auch die Auslaufphase in der Steuereinrichtung parametriert abgelegt. Auf diese Weise kann beispielsweise die Inbetriebnahme des hydrostatischen Getriebes, aber auch ein Herunterfahren des hydrostatischen Getriebes, beispielsweise nach Überlast, kontrolliert und sicher aufgrund der Druck- und/oder ersten Drehzahlbegrenzung durchgeführt werden.

In einer Weiterbildung ist in der Steuereinrichtung ein Abbruchkriterium abgelegt, mit dessen Erfüllen die Betriebsphase über die Steuereinrichtung beendbar, insbesondere beendet, ist. Dabei kann das Abbruchkriterium beispielsweise eine fest parametrierte Dauer der Betriebsphase sein. Für ein hydrostatisches Getriebe kann hier beispielsweise eine Dauer von 5 bis 30 Minuten, insbesondere 15 Minuten vorgesehen sein.

In einer Weiterbildung ist in der Steuereinrichtung ein Startkriterium abgelegt, mit dessen Erfüllen die Betriebsphase über die Steuereinrichtung startbar ist. Beispielsweise kann das Startkriterium eine, insbesondere von einem Bediener angeforderte, Inbetriebnahme des Getriebes oder des Fahrantriebes sein.

Ergänzend oder alternativ zu der bereits erwähnten, rein zeitlichen Definition des Startkriteriums und des Abbruchkriterium kann sowohl das Abbruchkriterium aber auch das Startkriterium in Abhängigkeit wenigstens einer Prozessgröße des Getriebes oder zumindest einer der Hydromaschinen definiert sein. Auf diese Weise wird die Betriebsphase nicht allein aufgrund festgelegter zeitlicher Ereignisse (Inbetriebnahme, Dauer der Betriebsphase) gestartet oder abgebrochen, sondern die Betriebsphase wird am realen Zustand des Getriebes in Abhängigkeit der diesen Zustand beschreibenden Prozessgrößen gestartet oder beendet. Auf diese Weise kann die Betriebsphase, beispielsweise bei früherem Erfüllen des notwendigen Abbruchkriteriums, verkürzt werden oder sogar entfallen, so dass Betriebszeiten mit verringerter Leistung verkürzt sind. Aber auch Verlängerungen, bei verzögertem Erfüllen des Abbruchkriteriums, sind denkbar.

Prinzipiell ist das Startkriterium erfüllt, wenn die Prozessgröße außerhalb eines in der Steuereinrichtung parametrierten, bestimmungsgemäßen Intervalls liegt. Entsprechend ist das Abbruchkriterium erfüllt, wenn die Prozessgröße innerhalb eines in der Steuereinrichtung parametrierten, bestimmungsgemäßen Intervalls liegt.

In einer Weiterbildung ist die Prozessgröße eine Druckmitteltemperatur des hydraulischen Kreises des Getriebes. Alternativ oder ergänzend ist auch eine Prozessgröße denkbar, die einen Verschleiß des hydrostatischen Getriebes oder einer der Komponenten repräsentiert. Die Druckmitteltemperatur eignet sich dabei besonders gut, da sie ein direktes Maß für die Viskosität und damit die Schmierfähigkeit des Druckmittels und somit für einen Schutz gegen Verschleiß des hydrostatischen Getriebes ist.

In einer Weiterbildung sind daher mehrere Erfassungsstellen für die Druckmitteltemperatur am hydrostatischen Getriebe vorgesehen. Dabei sind das Startkriterium und/oder das Abbruchkriterium beispielsweise von einer der erfassten Druckmitteltemperaturen oder in Abhängigkeit von wenigstens zwei der erfassten Druckmitteltemperaturen oder in Abhängigkeit von allen erfassten Druckmitteltemperaturen definiert. Welche Druckmitteltemperaturen in das jeweilige Kriterium eingehen, kann dabei je nach Anwendungsfall und Wichtigkeit der Erfassungsstelle in der Steuereinrichtung parametriert sein.

In einer Weiterbildung hat das hydrostatische Getriebe eine Druckregel- oder eine Druckreduziereinrichtung, insbesondere ein Druckregelventil oder ein Druckreduzierventil, die über die Steuereinrichtung mit einem elektrischen Sollwertsignal des Steuerdrucks ansteuerbar ist. Die jeweilige Einrichtung ist dabei derart ausgestaltet, dass der Steuerdruck im Wesentlichen proportional zum Sollwertsignal geregelt ist. Somit ist bei bekanntem Sollwertsignal der Steuerdruck und, aufgrund der vorbesprochenen Eigenschaft der ersten Hydromaschine, der Arbeitsdruck bekannt.

In einer Weiterbildung ist im Kennfeld der Steuerdruck für einen Zugbetrieb und/oder einen Bremsbetrieb der zweiten Hydromaschine abgelegt. Vorzugsweise ist das erste Verdrängungsvolumen der ersten Hydromaschine beidseitig einer Nullstellung verstellbar und im Kennfeld ist der Steuerdruck beidseitig der Nullstellung abgelegt. Vorzugsweise ist über einen Bediener ein Solldrehmoment der zweiten Hydromaschine anforderbar. Vorzugsweise ist dazu über die Steuereinrichtung ein Sollarbeitsdruck in Abhängigkeit von einem Solldrehmoment der zweiten Hydromaschine und vom Verdrängungsvolumen der zweiten Hydromaschine ermittelbar. Auf diese Weise ermöglicht das hydrostatische Getriebe oder der Fahrantrieb ein komfortables momentenbasiertes Fahren, wie es beispielsweise aus dem PKW-Bereich bekannt ist.

Ein hydrostatischer Fahrantrieb hat ein hydrostatisches Getriebe, das wenigstens gemäß einem der Aspekte der vorangegangenen Beschreibung ausgestaltet ist. Dabei ergeben sich für den hydrostatischen Fahrantrieb die bereits genannten Vorteile des hydrostatischen Getriebes in gleicher Weise, wodurch auch der Fahrantrieb besser gegen Verschleiß und Versagen geschützt ist.

Ein Verfahren zur Steuerung eines hydrostatischen Getriebes, das wenigstens gemäß einem der vorangegangenen Aspekte der Beschreibung ausgestaltet ist, weist erfindungsgemäß einen Schritt "Begrenzen des Arbeitsdrucks auf den Bruchteil des zugeordneten Nennwertes während der Betriebsphase über die Steuereinrichtung" auf. Die Vorteile des so gesteuerten Getriebes wurden bereits erläutert und gelten in gleicher Weise für das Verfahren, so dass weitere Ausführungen entbehrlich sind.

In einer Weiterbildung hat das Verfahren einen Schritt "Starten der Betriebsphase über die Steuereinrichtung, sobald ein Startkriterium hierfür erfüllt ist". Des Weiteren hat das Verfahren in dieser Weiterbildung einen Schritt "Abbrechen der Betriebsphase über die Steuereinrichtung, sobald ein Abbruchkriterium hierfür erfüllt ist". Mögliche Arten des einen oder der mehreren Startkriterien oder Abbruchkriterien wurden bereits in der vorangegangenen Beschreibung erläutert.

Zwei Ausführungsbeispiele eines erfindungsgemäßen Fahrantriebes mit einem erfindungsgemäßen hydrostatischen Getriebe sind in den Zeichnungen dargestellt. Anhand der Figuren dieser Zeichnungen wird die Erfindung nun näher erläutert. Es zeigen:
Figur 1 ein erstes Ausführungsbeispiel eines erfindungsgemäßen Fahrantriebs mit hydrostatischem Getriebe;
Figur 2 ein zweites Ausführungsbeispiel eines erfindungsgemäßen Fahrantriebs mit hydrostatischem Getriebe; und
Figur 3 ein Kennfeld eines Sollsteuerdrucks p_{Stsoll} in Abhängigkeit eines Arbeitsdrucks p der Getriebeanordnung und eines ersten Verdrängungsvolumens V_{HP} der ersten Hydromaschine.

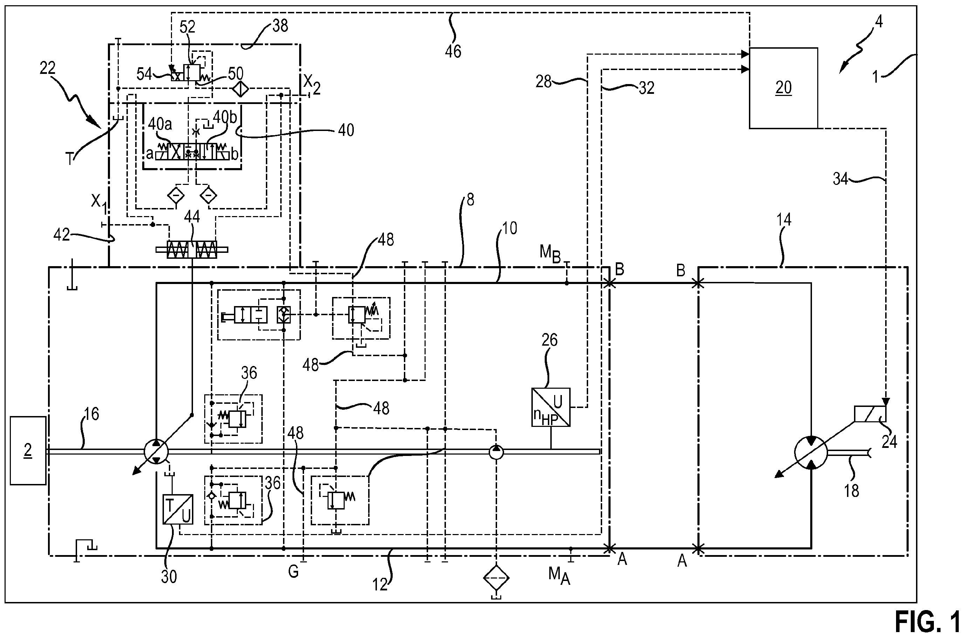

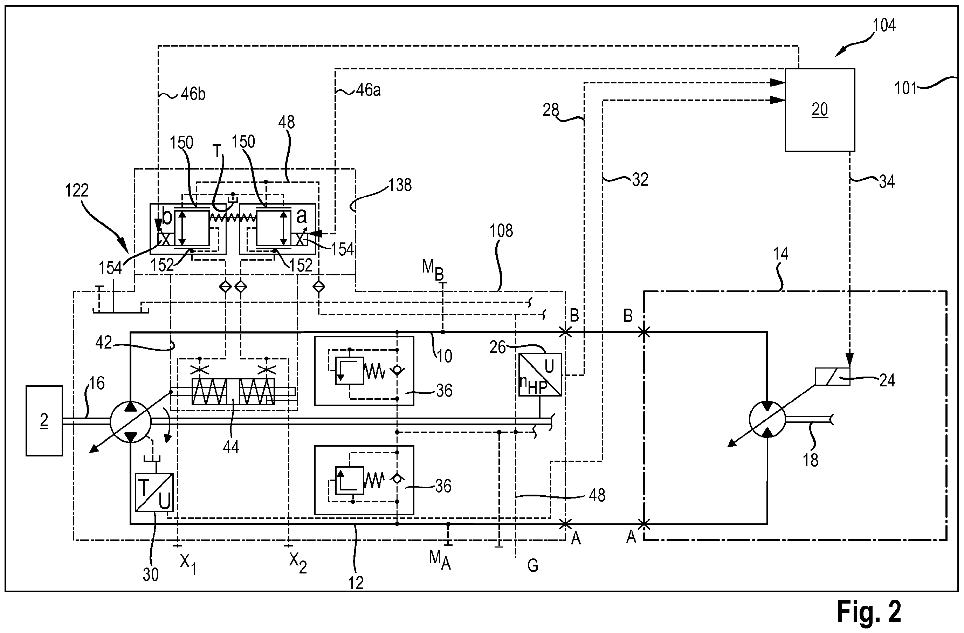

Zunächst werden anhand der Figuren 1 und 2 die Gemeinsamkeiten der beiden Ausführungsbeispiele erläutert. Gemäß den Figuren 1 und 2 hat ein Fahrantrieb 1; 101, beispielsweise der einer mobilen Arbeitsmaschine, eine als Dieselmotor ausgebildete Antriebsmaschine 2 und ein hydrostatisches Getriebe 4; 104. Das hydrostatische Getriebe 4; 104 hat eine als Axialkolbenpumpe in Schrägscheibenbauweise ausgestaltete, erste Hydromaschine 8; 108, die über zwei Arbeitsleitungen 10, 12 mit einer als Axialkolbenmotor in Schrägachsenbauweise ausgebildeten, zweiten Hydromaschine 14 fluidisch in einem geschlossenen, hydraulischen Kreis verbunden ist. Die erste Hydromaschine 8; 108 ist über eine Antriebswelle 16 mit der Antriebsmaschine 2 gekoppelt. Eine Triebwelle 18 der zweiten Hydromaschine 14 ist mit einem Abtrieb (nicht dargestellt) des Fahrantriebes 1; 101 gekoppelt. Beide Hydromaschinen 8; 108, 14 weisen jeweils ein verstellbares Verdrängungsvolumen auf. Sie sind dabei derart ausgestaltet, dass sie in allen vier Quadranten, in beiden Drehmomentrichtungen sowohl als Hydropumpe, als auch als Hydromotor arbeiten können.

Des Weiteren hat das hydrostatische Getriebe 4; 104 eine Steuereinrichtung 20, insbesondere zur Steuerung des Drehmoments M_{HM} der Triebwelle 18. Mit der Steuereinrichtung 20 signalverbunden sind eine erste Verstelleinrichtung 22; 122 der ersten Hydromaschine 8; 108 zur Verstellung ihres ersten Verdrängungsvolumens V_{HP} und eine zweite Verstelleinrichtung 24 der zweiten Hydromaschine 14 zur Verstellung von deren zweitem Verdrängungsvolumen V_{HM}.

Das hydrostatische Getriebe 4; 104 hat einen Drehzahlsensor 26, über den die erste Drehzahl n_{HP} der ersten Hydromaschine 8; 108 erfassbar ist. Der Drehzahlsensor 26 ist über die Signalleitung 28 mit der Steuereinrichtung 20 signalverbunden. Alternativ ist es möglich, dass die Drehzahl n_{HP} über einen CAN-Bus aus der Drehzahl der Antriebsmaschine 2 eingelesen wird. Zudem weist das Getriebe 4; 104 einen Temperatursensor 30 zur Erfassung einer Druckmitteltemperatur eines Leckagestroms der ersten Hydromaschine 8; 108 auf. Letztgenannter ist über eine Signalleitung 32 mit der Steuereinrichtung 20 signalverbunden.

Prinzipiell kann dem hydrostatischen Getriebe 4; 104 ein mehrstufiges Schaltgetriebe nachgeschaltet sein, um einen größeren Drehzahlbereich der Triebwelle 18 und damit einen größeren Geschwindigkeitsbereich des Fahrantriebs 1; 101 abzudecken.

Beiden Ausführungsbeispielen gemeinsam ist, dass die Verstellung des zweiten Verdrängungsvolumens V_{HM} über die Verstelleinrichtung 24 elektroproportional erfolgt. Dazu weist die Verstelleinrichtung 24 einen hydraulischen Stellzylinder (nicht dargestellt) auf, dessen gegenseitig wirksame Druckräume jeweils über ein elektroproportional verstellbares Druckregelventil (nicht dargestellt) mit Druckmittel versorgbar sind. Die elektroproportionale Verstellung ermöglicht eine stufenlose Verstellung des Verdrängungsvolumens V_{HM}. Dabei erfolgt die Verstellung proportional zu einem über die Signalleitung 34 von der Steuereinrichtung 20 ausgehenden Sollwertsignal V_{HMsoll}. Vorteil dieses Steuerungskonzeptes für die zweite Hydromaschine 14 ist, dass das tatsächliche zweite Verdrängungsvolumen V_{HM} im Wesentlichen dem von der Steuereinrichtung 20 angeforderten Sollwert V_{HMsoll} der zweiten Hydromaschine 14 entspricht.

Der Arbeitsdruck p, das heißt der höhere der beiden Drücke in den Arbeitsleitungen 10, 12, wird über die erste Hydromaschine 8; 108 geregelt. Im Folgenden wird das Regelkonzept der Druckregelung auf Basis eines zu regelnden Steuerdrucks p_{St} erläutert. Hierzu bieten sich zwei vorrichtungstechnische Varianten an, die in den Figuren 1 und 2 alternativ dargestellt sind.

Den beiden Varianten gemeinsam ist, dass die Arbeitsleitungen 10, 12 über jeweilige Druckbegrenzungsventile 36 mit Nachsaugfunktion gegen Überlast abgesichert sind. Des Weiteren weist die erste Hydromaschine 8; 108 einen Steuerdruckanschluss G auf, an dem ein konstanter Steuerdruck bereitgestellt wird.

Gemäß Figur 1 hat die Verstelleinrichtung 22 der ersten Hydromaschine 8 ein Druckreduzierventil 38. Dieses ist über ein 4/3-Wegeschaltventil 40 mit jeweils einer Druckmittelkammer eines Stellzylinders 42 verbindbar, dessen Kolben 44 mit einer Schwenkwiege der ersten Hydromaschine 8 zur Verstellung von deren ersten Verdrängungsvolumen V_{HP} gekoppelt ist. Das Druckreduzierventil 38 ist elektromagnetisch, elektrisch direkt gesteuert, betätigbar und über eine Signalleitung 46 mit der Steuereinrichtung 20 signalverbunden. Über eine Steuerdruckleitung 48 steht an einem Steuerdruckeingang 50 des Druckreduzierventils 38 der vom Anschluss G gelieferte Steuerdruck an. Ein Ventilkörper des Druckreduzierventils 38 ist über eine Feder in eine Endstellung vorgespannt, in der ein Steuerdruckausgang 52 des Druckreduzierventils 38 mit einem Tank T in Druckmittelverbindung gebracht ist. Der Federkraft entgegen wirkt ein Elektromagnet 54, der über die Signalleitung 46 bestrombar ist. Bei Bestromung verschiebt sich der Ventilkörper des Druckreduzierventils 38 von der genannten Endstellung (Verbindung Steuerdruckausgang 52 mit dem Tank T) hin zu Zwischenstellungen, in der zunehmend die andere Endstellung, die die fluidische Verbindung des Steuerdruckeingangs 50 mit dem Steuerdruckausgang 52 freigibt, Einfluss gewinnt. Dem entsprechend steigt mit zunehmender Bestromung des Elektromagneten 54 der Steuerdruck am Steuerdruckausgang 52. Der Steuerdruckausgang 52 ist über eine Steuerdruckleitung mit dem 4/3-Wegeschaltventil 40 verbunden. Je nach dessen Schaltstellung 40a oder 40b wird dann entweder die eine oder die andere Druckmittelkammer des Stellzylinders 42 mit Druckmittel beaufschlagt. Das 4/3-Wegeschaltventil 40 dient dadurch als ein die Fahrtrichtung bestimmendes Ventil.

Figur 2 zeigt das zweite Ausführungsbeispiel der ersten Hydromaschine 108, wobei im Folgenden auf die Abweichungen zum ersten Ausführungsbeispiel gemäß Figur 1 eingegangen wird. Ein Druckreduzierventil der ersten Hydromaschine 108 gemäß Figur 2 ist derart ausgestaltet, dass das 4/3-Wegeschaltventil 40 gemäß Figur 1 eingespart werden kann. Hierzu ist das Druckreduzierventil als Druckreduzierventileinheit 138 mit zwei einzelnen Druckreduzierventilen ausgestaltet. Dabei ist jedem Einzelnen eine Förderrichtung der ersten Hydromaschine 108 und damit eine Fahrtrichtung des Fahrantriebs 101 zugeordnet. Beide einzelnen Druckreduzierventile der Druckreduzierventileinheit 138 weisen jeweils einen Steuerdruckeingang 150 und einen Steuerdruckausgang 152 auf. Jeder der Steuerdruckausgänge 152 ist dabei einem der Druckmittelräume des Stellzylinders 42 fest zugeordnet. Ventilkörper der beiden Druckreduzierventile sind über eine Feder gekoppelt. Jedes der Druckreduzierventile weist eine erste Endstellung auf, in deren Richtung am Ventilkörper der am Steuerdruckausgang 152 anstehende Steuerdruck und die Kraft der Feder wirkt. In dieser ersten Einstellung ist der Steuerdruckausgang 152 mit dem Tank T fluidisch verbunden. In einer zweiten Einstellung des jeweiligen Druckreduzierventils ist der Steuerdruckeingang 150 mit dem Steuerdruckausgang 152 verbunden. Zwischen den Endstellungen sind Zwischenstellungen möglich. In die zweite Endstellung ist die Kraft des jeweiligen Elektromagneten 154 des einzelnen Druckreduzierventils wirksam. Die Elektromagneten 154 sind jeweils über eine Signalleitung 46a bzw. 46b mit der Steuereinrichtung 20 signalverbunden.

Das Wirkprinzip der Regelung des Drucks p ist beiden Ausführungsbeispielen gemeinsam. Es gilt, dass der am jeweiligen Steuerdruckausgang 52; 152 dem Stellzylinder 42 bereitgestellte Steuerdruck p_{St}, bezogen auf die jeweilige ausgewählte Fahrtrichtung, zu einer Vergrößerung des ersten Verdrängungsvolumens V_{HP} der ersten Hydromaschine 8; 108 führt. Dem entgegen wirkt jeweils der dann höhere der beiden Arbeitsdrücke p_{A}, p_{B} in den Arbeitsleitungen 10, 12. In beiden gezeigten Ausführungsbeispielen wird dies durch eine entsprechende Verdrillung der jeweiligen Steuerscheibe der ersten Hydromaschine 8; 108 erreicht. Aus dieser Bauweise resultiert, dass der jeweilige Arbeitsdruck p_{A} bzw. p_{B} als Funktion des Steuerdrucks p_{St} in Form eines in der Steuereinrichtung 20 abgelegten Kennfeldes bekannt ist.

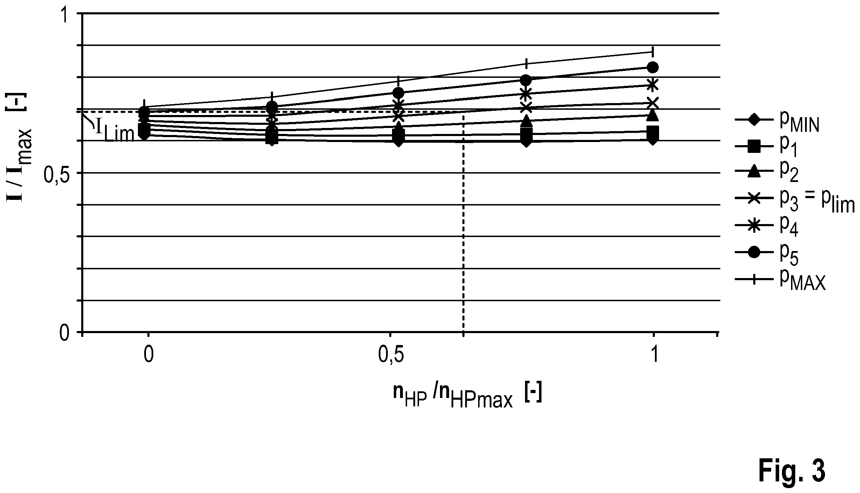

Ein Beispiel eines solchen Kennfeldes zeigt die Figur 3. Gemäß Figur 3 ist in der Steuereinrichtung 20 in Abhängigkeit der ersten Drehzahl n_{HP} der ersten Hydromaschine 8; 108 der Arbeitsdruck p und der diesem zugeordnete Stellstrom I des Elektromagneten 54 der Hydromaschine 8 gemäß Figur 1 oder eines der Elektromagneten 154 der ersten Hydromaschine 108 gemäß Figur 2 abgelegt.

Die Steuereinrichtung 20 überwacht fortlaufend die Druckmitteltemperatur T_{Öl} über die Temperaturerfassungseinheit 30. Liegt diese außerhalb eines in der Steuereinrichtung abgelegten, bestimmungsgemäßen Intervalls, ist ein Startkriterium für eine Betriebsphase des hydrostatischen Getriebes 4; 104 mit begrenztem Arbeitsdruck p erfüllt. Dem entsprechend wird der Arbeitsdruck über die Steuereinrichtung 20 drehzahlabhängig begrenzt. Für eine angenommene Drehzahl n_{HP} der ersten Hydromaschine 8; 108 und einem angenommenen, nicht zu überschreitenden Arbeitsdruck pₗᵢₘ = p₃ ergibt sich dann gemäß dem Kennfeld gemäß Figur 3 ein nicht zu überschreitender Stellstrom Iₗᵢₘ für den Elektromagneten 54, 154. Unter Berücksichtigung der Anforderungen des Bedieners, der Drehzahl n_{HP} der ersten Hydromaschine 8; 108 und des hinterlegten zulässigen Maximal-Arbeitsdrucks pₘₐₓ in der Betriebsphase, sorgt die Steuereinrichtung somit erfindungsgemäß über die Begrenzung des Stellstroms I auf Iₗᵢₘ für den Schutz des Getriebes 4; 104 gegen Verschleiß und Beschädigung. Erst mit Erfüllen des Abbruchkriteriums, in diesem Fall erreicht die Druckmitteltemperatur T_{Öl} das geforderte, bestimmungsgemäße Intervall, wird die Betriebsphase über die Steuereinrichtung 20 beendet und die Regelung des Arbeitsdrucks p kann wieder über den bis dahin begrenzenden Wert pₗᵢₘ hinaus erfolgen.

Offenbart ist ein hydrostatisches Getriebe für einen Fahrantrieb wobei an einer als Hydropumpe betreibbaren ersten Hydromaschine des Getriebes ein Steuerdruck in Richtung einer Vergrößerung des ersten Verdrängungsvolumens und in entgegengesetzter Richtung ein von dieser Verstellung abhängiger Arbeitsdruck des Getriebes wirksam ist, sodass der Arbeitsdrucks über eine Steuereinrichtung des Getriebes mittels einer Änderung des Steuerdrucks regelbar ist. Dabei ist in der Steuereinrichtung eine Betriebsphase parametriert, während der über die Steuereinrichtung der Arbeitsdruck und / oder eine erste Drehzahl der ersten Hydromaschine auf einen Bruchteil eines zugeordneten Nennwertes begrenzt ist oder sind. Offenbart sind weiterhin ein hydrostatischer Fahrantrieb mit diesem Getriebe und ein Verfahren zu dessen Steuerung.

### Bezugszeichenliste

- 1; 101: Fahrantrieb
- 2: Antriebsmaschine
- 4; 104: hydrostatisches Getriebe
- 8; 108: erste Hydromaschine
- 10, 12: Arbeitsleitung
- 14: zweite Hydromaschine
- 16: Antriebswelle
- 18: Triebwelle
- 20: Steuereinrichtung
- 22; 122: erste Verstelleinrichtung
- 24: zweite Verstelleinrichtung
- 26: Drehzahlsensor
- 28: Signalleitung
- 30: Temperatursensor
- 32,34: Signalleitung
- 36: Druckbegrenzungsventil
- 38; 138: Druckreduzierventil; Druckreduzierventileinheit
- 40: 4/3-Wegeschaltventil
- 40a, 40b: Schaltstellung
- 42: Stellzylinder
- 44: Stellkolben
- 46; 46a, 46b: Signalleitung
- 48: Steuerdruckleitung
- 50; 150: Steuerdruckeingang
- 52; 152: Steuerdruckausgang
- 54; 154: Elektromagnet

- p, p_{A}, p_{B}: Arbeitsdruck
- pₙₒₘ: Nennarbeitsdruck
- pₗᵢₘ: begrenzter Arbeitsdruck
- p_{St}: Steuerdruck
- V_{HP}: erstes Verdrängungsvolumen
- V_{HM}: zweites Verdrängungsvolumen
- n_{HP}: erste Drehzahl
- nₙₒₘ: Nenndrehzahl
- n_{HM}: zweite Drehzahl
- I: Stellstrom
- Iₗᵢₘ: begrenzter Stellstrom
- T_{Öl}: Druckmitteltemperatur

## Patentansprüche

1. Hydrostatisches Getriebe für einen Fahrantrieb (1; 101), das eine mit einer Antriebsmaschine (2) koppelbare erste Hydromaschine (8; 108) mit einem verstellbaren ersten Verdrängungsvolumen (V_{HP}) hat, die mit wenigstens einer mit einem Abtrieb des Fahrantriebs (1; 101) koppelbaren, zweiten Hydromaschine (14) des Getriebes (4; 104) in einem hydraulischen Kreis angeordnet ist, wobei an der ersten Hydromaschine (8; 108) ein Steuerdruck (p_{St}) des Getriebes (4; 104) in Richtung einer Vergrößerung des ersten Verdrängungsvolumens (V_{HP}) und in entgegengesetzter Richtung ein von dieser Verstellung abhängiger Arbeitsdruck (p) der zweiten Hydromaschine (14) wirksam ist, sodass der Arbeitsdruck (p) über eine Steuereinrichtung (20) des Getriebes (4; 104) mittels einer Änderung des Steuerdrucks (p_{St}) regelbar ist, **dadurch gekennzeichnet, dass** in der Steuereinrichtung (20) eine Betriebsphase des Getriebes (4; 4) parametriert ist, während über die Steuereinrichtung (20) der Arbeitsdruck (p) der ersten Hydromaschine (8; 108) auf einen Bruchteil eines zugeordneten Nennwertes (pₙₒₘ) begrenzt ist, wobei in der Steuereinrichtung in Abhängigkeit der Drehzahl der ersten Hydromaschine (8; 108) der Arbeitsdruck (p) und der dem Arbeitsdruck (p) zugeordnete Steuerdruck (p_{St}) oder ein dem Steuerdruck (p_{St}) entsprechendes elektrisches Signal (I) abgelegt sind.

2. Getriebe nach Anspruch 1, wobei die Betriebsphase eine Einlaufphase oder eine Auslaufphase des Getriebes (4; 104) ist.

3. Getriebe nach Anspruch 1 oder 2, wobei in der Steuereinrichtung (20) ein Abbruchkriterium abgelegt ist, mit dessen Erfüllen die Betriebsphase über die Steuereinrichtung (20) beendbar ist.

4. Getriebe nach Anspruch 3, wobei das Abbruchkriterium eine Dauer der Betriebsphase ist.

5. Getriebe nach einem der vorhergehenden Ansprüche, wobei in der Steuereinrichtung (20) ein Startkriterium abgelegt ist, mit dessen Erfüllen die Betriebsphase über die Steuereinrichtung (20) startbar ist.

6. Getriebe nach Anspruch 5, wobei das Startkriterium eine Inbetriebnahme des Getriebes (4; 104) oder des Fahrantriebs (1; 101) ist.

7. Getriebe nach einem der Ansprüche 3 bis 5, wobei das Abbruchkriterium und / oder das Startkriterium in Abhängigkeit wenigstens einer Prozessgröße des Getriebes (4; 104) definiert ist oder sind.

8. Getriebe nach Anspruch 7, wobei bei einem erfülltem Startkriterium die Prozessgröße außerhalb eines in der Steuereinrichtung (20) parametrierten, bestimmungsgemäßen Intervalls liegt, und /oder wobei bei einem erfülltem Abbruchkriterium die Prozessgröße innerhalb eines in der Steuereinrichtung (20) parametrierten, bestimmungsgemäßen Intervalls liegt.

9. Getriebe nach Anspruch 7 oder 8, wobei die Prozessgröße eine Druckmitteltemperatur (T_{Öl}) des hydraulischen Kreises des Getriebes (4; 104) ist.

10. Getriebe nach Anspruch 9 mit mehreren Erfassungsstellen für die Druckmitteltemperatur (T_{Öl}), wobei das Abbruchkriterium und / oder das Startkriterium in Abhängigkeit von wenigstens zwei der erfassten Druckmitteltemperaturen (T_{Öl}) definiert ist oder sind.

11. Getriebe nach einem der vorhergehenden Ansprüche mit einer Druckregel- oder einer Druckreduziereinrichtung (38; 138), die über die Steuereinrichtung (20) mit einem elektrischen Sollwertsignal (I) des Steuerdrucks (p_{St}) ansteuerbar ist, und die derart ausgestaltet ist, dass der Steuerdruck (p_{St}) im Wesentlichen proportional zum Sollwertsignal (I) ist.

12. Hydrostatischer Fahrantrieb mit einem hydrostatischen Getriebe (4; 104), das gemäß einem der vorhergehenden Ansprüche ausgestaltet ist.

13. Verfahren zur Steuerung eines hydrostatischen Getriebes (4; 104), das gemäß einem der Ansprüche 1 bis 11 ausgestaltet ist, **gekennzeichnet durch** einen Schritt
- Begrenzen des Arbeitsdrucks (p) auf den Bruchteil des zugeordneten Nennwertes (pₙₒₘ, nₙₒₘ) während der Betriebsphase über die Steuereinrichtung (20).

14. Verfahren nach Anspruch 13, mit einem Schritt
- Starten der Betriebsphase über die Steuereinrichtung (20), sobald ein Startkriterium erfüllt ist.
und einem Schritt
- Abbrechen der Betriebsphase über die Steuereinrichtung (20), sobald ein Abbruchkriterium erfüllt ist.

## Claims

1. Hydrostatic transmission for a drive train (1; 101), said transmission comprising a first hydraulic machine (8; 108) that can be coupled to a drive machine (2) and comprises an adjustable first displacement volume (V_{HP}) and is arranged together with at least one second hydraulic machine (14) of the transmission (4, 104) in a hydraulic circuit and said second hydraulic machine can be coupled to an output of the drive train (1; 101), wherein a control pressure (p_{St}) of the transmission (4, 104) at the first hydraulic machine (8; 108), is effective in the direction in which the first displacement volume (V_{HP}) is increased and a working pressure (p) of the second hydraulic machine (14) that is dependent upon this adjustment is effective in the opposite direction, so that the working pressure (p) can be controlled by way of a control device (20) of the transmission (4; 104) by means of changing the control pressure (P_{St}), **characterized in that** an operating phase of the transmission (4; 104) is parameterized in the control device (20), while by way of the control device (20) the working pressure (p) of the first hydraulic machine (8; 108) is limited to a fraction of an allocated nominal value (pₙₒₘ), wherein the working pressure (p) and the control pressure (p_{St}) allocated to the working pressure (p) or an electrical signal (I) corresponding to the control pressure (pₛₜ) are stored in the control device (20) as a function of the speed of the first hydraulic machine (8; 108).

2. Transmission according to Claim 1, wherein the operating phase is an inflow phase or an outflow phase of the transmission (4; 104).

3. Transmission according to Claim 1 or 2, wherein a termination criterion is stored in the control device (20) and the operating phase can be terminated by way of the control device (20) on the basis of said termination criterion being fulfilled.

4. Transmission according to Claim 3, wherein the termination criterion is a duration of the operating phase.

5. Transmission according to any one of the preceding claims, wherein a start-up criterion is stored in the control device (20) and the operating phase can be started by way of the control device (20) on the basis of said start-up criterion being fulfilled.

6. Transmission according to Claim 5, wherein the start-up criterion is a start-up procedure of the transmission (4; 104) or the drive train (1; 101).

7. Transmission according to any one of Claims 3 to 5, wherein the termination criterion and/or the start-up criterion is or are defined in dependence upon at least one process variable of the transmission (4; 104).

8. Transmission according to Claim 7, wherein in the case of a start-up criterion being fulfilled the process variable lies outside a designated range that is parameterized in the control device (20) and/or wherein in the case of a termination criterion being fulfilled the process variable lies within a designated range that is parameterized in the control device (20).

9. Transmission according to Claim 7 or 8, wherein the process variable is a pressure medium temperature (T_{Öl}) of the hydraulic circuit of the transmission (4; 104).

10. Transmission according to Claim 9 having multiple sensing sites for sensing the pressure medium temperature (T_{Öl}), wherein the termination criterion and/or the start-up criterion is or are defined in dependence upon at least two of the ascertained pressure medium temperatures (T_{Öl}).

11. Transmission according to any one of the preceding claims having a pressure control device or a pressure reducing device (38; 138) that can be controlled by way of the control device (20) by means of an electrical desired value signal (**I**) of the control pressure (p_{St}), and that is embodied in such a manner that the control pressure (p_{St}) is essentially proportional to the desired value signal (**I**).

12. Hydrostatic drive train having a hydrostatic transmission (4; 104) that is embodied in accordance with any one of the preceding claims.

13. Method for controlling a hydrostatic transmission (4; 104) that is embodied in accordance with any one of Claims 1 to 11, **characterized by** a step:
- Limiting the working pressure (p) to the fraction of the allocated nominal value (pₙₒₘ, nₙₒₘ) during the operating phase by way of the control device (20).

14. Method according to Claim 13 comprising a step:
- Starting the operating phase by way of the control device (20) as soon as a start-up criterion is fulfilled.
and a step
- Terminating the operating phase by way of the control device (20) as soon as a termination criterion is fulfilled.

## Revendications

1. Transmission hydrostatique, pour un entraînement de déplacement (1 ; 101), qui a une première machine hydraulique (8 ; 108) qui peut être couplée à un moteur d'entraînement (2), avec un premier volume de refoulement (V_{HP}) réglable, et qui est disposée dans un circuit hydraulique avec au moins une deuxième machine hydraulique (14) de la transmission (4 ; 104) pouvant être couplée à une sortie de l'entraînement de déplacement (1 ; 101) et, sur la première machine hydraulique (8 ; 108), une pression de commande (p_{St}) de la transmission (4 ; 104) étant active en direction d'une augmentation du premier volume de refoulement (V_{HP}) et, dans la direction inverse, une pression de travail (p) de la deuxième machine hydraulique (14) dépendant de ce déplacement, étant active, de telle sorte que la pression de travail (p) peut être régulée par le biais d'un dispositif de commande (20) de la transmission (4 ; 104) au moyen d'une variation de la pression de commande (p_{St}), **caractérisée en ce qu'**une phase de fonctionnement de la transmission (4 ; 4) est paramétrée dans le dispositif de commande (20), tandis que, par le biais du dispositif de commande (20), la pression de travail (p) de la première machine hydraulique (8 ; 108) est limitée à une fraction d'une valeur nominale (pₙₒₘ) affectée, la pression de travail (p) et la pression de commande (p_{St}) affectée à la pression de travail (p) ou un signal (I) électrique correspondant à la pression de commande (p_{St}) étant enregistrés dans le dispositif de commande en fonction de la vitesse de rotation de la première machine hydraulique (8 ; 108).

2. Transmission selon la revendication 1, la phase de fonctionnement étant une phase de mise en marche ou une phase de mise à l'arrêt de la transmission (4 ; 104).

3. Transmission selon la revendication 1 ou 2, un critère d'interruption étant enregistré dans le dispositif de commande (20), avec le respect duquel la phase de fonctionnement peut être arrêtée par le biais du dispositif de commande (20).

4. Transmission selon la revendication 3, le critère d'interruption étant une durée de la phase de fonctionnement.

5. Transmission selon l'une des revendications précédentes, un critère de démarrage étant enregistré dans le dispositif de commande (20), avec le respect duquel la phase de fonctionnement peut être lancée par le biais du dispositif de commande (20).

6. Transmission selon la revendication 5, le critère de démarrage étant une mise en route de la transmission (4 ; 104) ou de l'entraînement de déplacement (1 ; 101).

7. Transmission selon l'une des revendications 3 à 5, le critère d'interruption et/ou le critère de démarrage étant défini(s) en fonction d'au moins une grandeur de process de la transmission (4 ; 104).

8. Transmission selon la revendication 7, la grandeur de process se situant, quand un critère de démarrage est respecté, à l'extérieur d'un intervalle approprié paramétré dans le dispositif de commande (20), et/ou la grandeur de process se situant, quand un critère d'interruption est respecté, à l'intérieur d'un intervalle approprié paramétré dans le dispositif de commande (20).

9. Transmission selon la revendication 7 ou 8, la grandeur de process étant une température moyenne de pression (T_{Öl}) du circuit hydraulique de la transmission (4 ; 104).

10. Transmission selon la revendication 9, avec plusieurs emplacements de détection pour la température moyenne de pression (T_{Öl}), le critère d'interruption et/ou le critère de démarrage étant défini(s) en fonction d'au moins deux des températures moyennes de pression (T_{Öl}) détectées.

11. Transmission selon l'une des revendications précédentes, avec un dispositif de régulation de pression ou un dispositif de réduction de pression (38 ; 138) qui peut être piloté par le biais du dispositif de commande (20) avec un signal de valeur de consigne (I) électrique de la pression de commande (p_{St}) et qui est constitué de telle sorte que la pression de commande (p_{St}) est essentiellement proportionnelle au signal de valeur de consigne (I).

12. Entraînement de déplacement hydrostatique avec une transmission (4 ; 104) hydrostatique qui est constituée selon l'une des revendications précédentes.

13. Procédé destiné à la commande d'une transmission (4 ; 104) hydrostatique qui est constituée selon l'une des revendications 1 à 11, **caractérisé par** une étape - limitation de la pression de travail (p) à la fraction de la valeur nominale (pₙₒₘ, nₙₒₘ) affectée, pendant la phase de fonctionnement, par le biais du dispositif de commande (20).

14. Procédé selon la revendication 13, avec une étape
- lancement de la phase de fonctionnement par le biais du dispositif de commande (20) dès qu'un critère de démarrage est respecté
et avec une étape
- interruption de la phase de fonctionnement par le biais du dispositif de commande (20) dès qu'un critère d'interruption est respecté.
